# EUROPEAN PATENT APPLICATION

(11) **EP 4 763 921 A2**
(43) Date of publication of application: **24.06.2026**
(21) Application number: 26169715.5
(22) Date of filing: 22.03.2024
(51) Int. Cl.: C08L 89/06

(54) **PROTEIN BASED COUPLING AGENT FOR CARBON FIBERS**

(30) Priority: 24.03.2023 EP 23163998
(62) Divisional of application: 24714918.0
(71) Applicant: BYK-Chemie GmbH, 46483 Wesel (DE)
(72) Inventor: Radespiel, Tina, 46483 Wesel (DE); Gunning, Lee Robyn, 46483 Wesel (DE); Schwing, Julia, 46483 Wesel (DE); Bastian, Torsten, 46483 Wesel (DE)
(74) Representative: Altana IP Department

(57) **Abstract**

A composition comprising carbon fibers, and hydrolyzed protein, wherein the carbon fibers are present in an amount from 85.0000 to 99.9995 % by weight and the hydrolyzed protein is present in an amount from 0.0005 to 15.0000 % by weight, calculated on the total amount of hydrolyzed protein and carbon fibers, a curable resin or pre-polymer component having at least one ethylenically unsaturated polymerizable group, and water in an amount in the range of 0.0 to 10.0 % by weight, calculated on the total weight of the composition.

## Description

The invention relates to a composition comprising carbon fibers, and hydrolyzed protein, wherein the carbon fibers are present in an amount from 85.0000 to 99.9995 % by weight and the hydrolyzed protein is present in an amount from 0.0005 to 15.0000 % by weight, calculated on the total amount of hydrolyzed protein and carbon fibers. Moreover, the invention relates to a process of manufacturing a carbon fiber composite material and the carbon fiber composite material. The invention further relates to an additive composition and the use of the additive composition.

Carbon fiber reinforced composite materials comprise carbon fibers embedded in a polymer matrix. The polymer matrix serves as binder between the fibers. The matrix polymer may be a thermoplastic polymer and/or a crosslinked polymer. The carbon fibers generally improve the mechanical properties of composite material, as compared to the matrix polymer alone. Improvements of tensile strength and stiffness have been achieved, while the composite materials have a low density. Such materials have attractive properties for use in vehicles for air and ground transportation because their low weight allows a low fuel or energy consumption, e.g., of engine driven vehicles. Carbon fiber composite materials have also been employed in other areas, where a combination of high mechanical strength and light weight are desirable for example in wind energy, for example rotor blades for windmills, aircrafts, automobile, sports goods like tennis rackets and hockey sticks and protective and safety clothing like safety shoes.

Additives which serve as a coupling agent between the carbon fibers and the polymer matrix have been described. Such coupling agents can improve the bond strength between the carbon fibers and the polymer matrix and thus improve the overall mechanical properties of the carbon fiber composite material.

WO 2014/071517 relates to biocomposite materials. The composite materials are created by embedding a fibrous material with a polymer matrix comprising animal protein and a crosslinking agent, followed by curing. During the mechanical tests several problems occurred. For example, data sets exhibited rather large standard deviations, many specimens broke outside of the mid-section, sample surface was not uniform, actual samples thickness varied, fiber layer delamination occurred, fiber distribution was problematic and specimens were damp or soggy (p. 14, [0065]- [0066]). These results coincide with the findings of the present invention, that the use of high amounts of protein, will not lead to an improvement of the overall mechanical properties of the fiber composite material but are indeed detrimental.

There is a need for additives acting as coupling agents for carbon fibers for use in composite materials which alleviate the above-mentioned drawbacks. Furthermore, the additives should effectively improve the mechanical properties of carbon fiber composite materials, even if applied in small amounts. Another objective of the invention is to provide coupling agents which are ecological friendly and easily degradable. Moreover, they should be cost-efficient and easily obtainable.

In view of the above the invention provides a composition comprising carbon fibers, and hydrolyzed protein, wherein the carbon fibers are present in an amount from 85.0000 to 99.9995 % by weight and the hydrolyzed protein is present in an amount from 0.0005 to 15.0000 % by weight, calculated on the total amount of hydrolyzed protein and carbon fibers, a curable resin or pre-polymer component having at least one ethylenically unsaturated polymerizable group, and optionally water in an amount in the range of 0.0 to 10.0 % by weight, calculated on the total weight of the composition.

Hydrolysis is any chemical reaction in which a molecule of water breaks one or more chemical bonds. There are different types of hydrolysis for example chemical, physical and enzymatic hydrolysis. "Hydrolyze" refers to the cleavage of amide bonds in a polypeptide to produce shorter amino acid chains with carboxylic acid functional groups and amino groups. Hydrolysis of the proteins generally results in the production of proteins and peptides with varying molecular weight, as well as free amino acids. As used herein, the term "hydrolyzed protein" is the mixture of proteins, peptides, and/or free amino acids produced by the hydrolysis of the proteins.

Usually, a mixture of different types of hydrolysis is used to obtain the hydrolyzed protein. For example, the protein could first be extracted by treatment with hot water and then further hydrolyzed enzymatically. Parameters like pH value, temperature and pressure may be adjusted to obtain the desired result.

The catalytic action of enzymes allows the enzymatic hydrolysis of proteins. Hydrolase is a class of enzyme that commonly perform as biochemical catalysts that use water to break a chemical bond, which typically results in dividing a larger molecule into smaller molecules.

Some common examples of hydrolase enzymes are esterases including lipases, phosphatases, glycosidases, peptidases, and nucleosidases. Examples for peptidases are pepsin and trypsin.

In one embodiment, the hydrolysis step comprises alkaline hydrolysis where the proteins are hydrolyzed in the presence of a base. In one embodiment, the base comprises an aqueous solution of an alkali metal hydroxide or an alkaline earth metal hydroxide. In one embodiment, alkaline hydrolysis may take place under elevated temperature and pressure, for a sufficient length of time to produce hydrolyzed proteins of a desired size. For example, the alkaline hydrolysis may be conducted at a temperature of about 150° C and at a pressure of about 400 kPa.

In another embodiment, the hydrolysis step comprises thermal hydrolysis. For example, the proteins may be subjected to temperatures of at least about 180° C and at a pressure of about 1,200 kPa, for a length of time sufficient to produce hydrolyzed proteins of a desired size.

The conditions and type of hydrolysis may be chosen by one skilled in the art to produce a hydrolyzed protein having a desired degree of hydrolysis. More severe hydrolysis will produce relatively smaller peptides and more individual amino acids. Less severe hydrolysis will produce relatively larger peptides.

Preferably, the hydrolyzed protein comprises or contains hydrolyzed protein derived from animals or plants or mixtures thereof. Preferred is hydrolyzed protein from animals like pigs, chicken, cows. Moreover, the hydrolyzed protein could be bovine protein, protein derived from bovine serum, pig skin and/or casein or other proteins derived from milk. Preferred plant-based protein is derived for example from pea, soybeans, wheat, potatoes.

It is further preferred that the hydrolyzed protein is derived from collagen. Collagen is the main structural protein in the extracellular matrix found in the body's various connective tissues. As the main component of connective tissue, it is the most abundant protein in mammals. Collagen consists of amino acids bound together to form a collagen helix. It is mostly found in connective tissue such as cartilage, bones, tendons, ligaments, and skin.

Gelatin, which is commercially available and used in food and industry, is partially hydrolyzed collagen and usually has a molecular mass in the range of 100-500 kDa. The gelatin has a gel strength of around 30 to 300 grams Bloom using the Bloom test of gel strength and is able to form a gel. This gelling gelatin is also called type G gelatin. Gelatin itself is not to be understood as hydrolyzed protein according to the present invention and it does not show the desired effect as could be shown by the conducted experiments. Suitable is hydrolyzed gelatin, which preferably has a gel strength below 30 grams Bloom, more preferably below 20 grams, even more preferably below 10 grams. It is most preferred, that the hydrolyzed gelatin has a gel strength between 0 to 20 grams Bloom or even has a gel strenght of 0 grams Bloom. The non-gelling gelatin type is also known as type F gelatin or collagen peptides and is mainly composed of low molecular weight components. Preferably, the hydrolyzed protein is non-gelling and therefore not able to from a gel.

The gel strength of gelatin (jelly strength, Bloom) is the mass in grams necessary to depress a standard plunger (AOAC plunger, with 12.70 mm (0.500 inches) diameter, plane surface and sharp edge, no measurable radius ) 4 mm into the gel having a concentration of 6.67 % and matured at 10.0°C for 17 h. Suitable apparatus for testing the gel strength are gelometers, for example Lloyd TA Plus, LFRA Texture Analyser (Brookfield), LFRA Texture Analyse CT3 (Brookfield), Texture Analyser TA-XTplus (Stable Micro Systems), Texture Analyser TA-XT2i (Stable Micro Systems), Zwick /Roell.

To assess the gel strenght a 6.67 % solution of the gelatin sample is prepared in a wide-mouthed test bottle (with a capacity of approximately 155 ml, internal diameter of 59 mm +/-1 mm, overall height 85 mm and a flat bottom) with 7.50 g gelatin and 105 mL deionized water at 60°C, cooled to 10.0°C and kept for 17 h for maturation at this temperature.

Preferably, the hydrolyzed protein has a molecular weight distribution wherein at least 50% by weight of the hydrolyzed protein is in the range of 1000 g/mol to 100000 g/mol. More preferably, the hydrolyzed protein has a molecular weight distribution wherein at least 50% by weight of the hydrolyzed protein is in the range of 1000 to 75000 g/mol. Even more preferably, the hydrolyzed protein has a molecular weight distribution wherein at least 50% by weight of the hydrolyzed protein is in the range of 1000 to 50000 g/mol and most preferably, the hydrolyzed protein has a molecular weight distribution wherein at least 50%by weight of the hydrolyzed protein is in the range of 5000 to 50000 g/mol.

The molecular weight is determined by high performance size exclusion chromatography (HPSEC).
Column: Media: Silica; Particle: 5 micrometer; Pore Size: 125 angstrom; 7.8mm I.D. x 30cm Length; (TSK G 2000 SWXL 5µm (Ref. 0008540 Tosoh Bioscience GmbH))
Guard column: Media: Silica; Particle: 7 micrometer; 6mm I.D. x 4cm Length (TSK SWXL Guardcol 7µm (Ref. 0008543, Tosoh Bioscience GmbH))

As eluent 1 L of an aqueous solution is prepared by dissolving 13.27 g KH2PO4, 0.445 g Na2HPO4 and 11.69 g NaCl.

Calibration standards: narrow calibration: FILK calibration solution (CNBr bovine); broad calibration commercially available GME porcine collagen peptides broad calibration standards (Gelita Eberbach).

In one embodiment the hydrolyzed protein is part of an additive composition which comprises hydrolyzed protein, and at least one of a polar solvent, wherein the polar solvent comprises at least one polymer based on ethylene oxide or propylene oxide and mixtures thereof, wherein optionally the end groups are etherified with alkyl groups having 1 to 6 carbon atoms. Preferably, the end groups are etherified with alkyl groups having 1 to 4 carbon atoms. Polymers are defined as molecules having at least two repeating units.

Preferably, the additive composition comprises
0.1 to 99.0 % by weight of the hydrolyzed protein, and
1.0 to 99.9 % by weight of the polar solvent,
calculated on the total weight of the hydrolyzed protein and polar solvent.

More preferably, the additive composition comprises
0.1 to 75.0 % by weight of the hydrolyzed protein, and
25.0 to 99.9 % by weight of the polar solvent,
calculated on the total weight of the hydrolyzed protein and polar solvent.

Even more preferably, the additive composition comprises
0.1 to 50.0 % by weight of the hydrolyzed protein, and
50.0 to 99.9 % by weight of the polar solvent,
calculated on the total weight of the hydrolyzed protein and polar solvent.

Most preferably, the additive composition comprises
0.1 to 35.0 % by weight of the hydrolyzed protein, and
65.0 to 99.9 % by weight of the polar solvent,
calculated on the total weight of the hydrolyzed protein and polar solvent.

The at least one of a polar solvent, wherein the polar solvent comprises at least one polymer based on ethylene oxide or propylene oxide and mixtures thereof, wherein optionally the end groups are etherified with alkyl groups having 1 to 6 carbon atoms has preferably a molecular weight of from 100 to 1000 g/mol. It is more preferred, that the polar solvent has a molecular weight of from 100 to 800 g/mol, even more preferred a molecular weight of from 200 to 800 g/mol and most preferred the polar solvent has a molecular weight of from 200 to 700 g/mol. The molecular weight of the polar solvent can suitably be determined by measurement of the hydroxyl group content of the hydroxyl terminated segments, for example by titration (ISO 4629-1 :2016).

Suitably, the polar solvent comprises at least one of methoxy polyethylene glycol, polyethylene glycol and polypropylene glycol.

All known kinds of carbon fibers can be used in the composition according to the invention, except carbon nano fibers or other nano material. Preferably, the carbon fibers have at least a diameter of 1 micrometer, based on the smallest extent in one dimension. More preferably, the carbon fibers have at least a diameter of 2 micrometer and even more preferably at least a diameter of 3 micrometers. Most preferably, the carbon fibers have a diameter in the range of 3 to 10 micrometers or 3 to 20 micrometers. Carbon fibers include amorphous carbon fibers and graphite fibers. Carbon fibers produced from various starting materials are equally suitable, for example carbon fibers prepared from polyacrylonitrile, pitch, or rayon or also from bio-based sources. The carbon fibers may have undergone a chemical or mechanical surface pretreatment, for example with known sizing agents during fiber manufacture. Carbon fibers which have not been subjected to specific pretreatments may likewise be employed. It is preferred that the carbon fibers have already been subjected to a sizing treatment.

Depending on the intended end use, the carbon fibers may be present as filament fibers, as staple fibers, or as chopped fibers. In some embodiments, the carbon fibers are present as a woven or non-woven fabric. On other embodiments, the carbon fibers are present as a roving.

The compositions according to the invention are very suitable for preparing carbon fiber composite materials. Therefore, the compositions may comprise further components and materials which a generally used for the manufacturing of carbon fiber composite materials.

The composition further comprises a curable resin or prepolymer component having at least one ethylenically unsaturated polymerizable group. The curable resin or prepolymer component generally forms the matrix polymer of the carbon fiber composite material. Such curable resins are well-known in the art. The presence of the resin in the composition generally renders the composition paste-like or liquid at a temperature of 23° C. Examples include unsaturated polyester resins, for example a polyester resin having unsaturated groups based on maleic or fumaric acid. In other embodiments, the curable resin may be a polyurethane resin having ethylenically unsaturated polymerizable groups, for example polyurethane resins having one or more acrylate or methacrylate end groups or polyurethanes which produced by reacting isocyanates with polyols, often in the presence of a catalyst, or upon exposure to ultraviolet light. Other examples of suitable resins include epoxy acrylates, also called vinyl ester resins, which are resins produced by the esterification of an epoxy resin with acrylic or methacrylic acids, dicyclopentadiene based resins, epoxy resins and so-called (meth)acrylic syrup systems. Epoxy resins are a class of reactive prepolymers and polymers which contain epoxide groups. Epoxy resins are produced for example from combining epichlorohydrin and bisphenol A to give bisphenol A diglycidyl ethers. It is preferred, that the curable resin or curable pre-polymer comprises at least one of an epoxy resin, epoxy acrylates (vinyl ester resin) or polyurethane resin.

Further components may be present in the composition, in particular such components which are typically used in manufacturing carbon fiber composite materials. Examples of such components include thermoplastic resins or polymers, organic or inorganic fillers and pigments, thickeners, UV stabilizers, mold release agents, anti-foaming agents, and monomers or ss-linkers having ethylenically unsaturated polymerizable groups, such as acrylates and methacrylates or vinyl aromatic compounds. Curing initiators, such as organic peroxides, azo initiators, or benzopinacol or curing agents, such as amines, anhydrides or isocyanates may likewise be included in the composition.

It is preferred that the composition comprises
30.0000 to 89.9995 % by weight of carbon fibers,
0.0005 to 5.0000 % by weight of hydrolyzed protein, and
10.0000 to 69.9995 % by weight of curable resin or curable pre-polymer,
calculated on the total amount of hydrolyzed protein, carbon fibers and curable resin or pre-polymer.

It is more preferred that the composition comprises
40.0000 to 89.9995 % by weight of carbon fibers,
0.0005 to 5.0000 % by weight of hydrolyzed protein, and
10.0000 to 59.9995 % by weight of curable resin or curable pre-polymer,
calculated on the total amount of hydrolyzed protein, carbon fibers and curable resin or pre-polymer.

It is even more preferred that the composition comprises
40.00 to 89.99 % by weight of carbon fibers,
0.01 to 3.00 % by weight of hydrolyzed protein, and
10.00 to 59.99 % by weight of curable resin or curable pre-polymer,
calculated on the total amount of hydrolyzed protein, carbon fibers and curable resin or pre-polymer.

It is the most preferred that the composition comprises
45.00 to 84.99 % by weight of carbon fibers,
0.01 to 3.00 % by weight of hydrolyzed protein, and
15.00 to 54.99 % by weight of curable resin or curable pre-polymer,
calculated on the total amount of hydrolyzed protein, carbon fibers and curable resin or pre-polymer.

The composition is a non-aqueous composition. A non-aqueous composition is essentially free from water. That denotes a paste-like or liquid composition comprising water in an amount in the range of 0.0 to 10.0 % by weight, preferably in the range of 0.0 to 7.0 % by weight of water, calculated on the total weight of the composition. More preferably, the non-aqueous composition comprises 0 to 5.0 % by weight of water. For example, the composition comprises less than 3.0 % by weight or less than 1.0% by weight of water, calculated on the total weight of the composition. Suitably, the composition comprises 0 to 3.0 % by weight of water or from 0 to 1.0% by weight of water, calculated on the total weight of the composition.

Suitably, the hydrolyzed protein is in a polar solvent. Examples of suitable polar solvents are methoxypolyethylene glycol, polyethylene glycol, polypropylene glycol and mixtures thereof.

Preferably, the polar solvent comprises at least one polymer based on ethylene oxide or propylene oxide and mixtures thereof, wherein optionally the end groups are etherified with alkyl groups having 1 to 6 carbon atoms. More preferably, the polar solvent comprises at least one of methoxypolyethylene glycol, polyethylene glycol and polypropylene glycol. It is most preferred that the polar solvent comprises at least one of methoxypolyethylene glycol 350 (MPEG 350), methoxypolyethylene glycol 500(MPEG 500) and polypropylene glycol 600 (PPG 600). In a further embodiment, the polar solvent contains methoxypolyethylene glycol, polyethylene glycol and/or polypropylene glycol.

Suitably, the composition comprises
0.0005 to 15.0000 % by weight of the hydrolyzed protein
60.0000 to 99.9495 % by weight of the carbon fibers, and
0.0500 to 25.0000 % by weight of the polar solvent,
calculated on the total weight of the hydrolyzed protein, the carbon fibers, and the polar solvent.

More suitably, the composition comprises
0.0005 to 15.0000 % by weight of the hydrolyzed protein
60.0000 to 99.9495 % by weight of the carbon fibers, and
0.0500 to 25.0000 % by weight of the polar solvent,
calculated on the total weight of the hydrolyzed protein, the carbon fibers, and the polar solvent.

Even more suitably, the composition comprises
0.0005 to 15.0000 % by weight of the hydrolyzed protein
70.0000 to 99.9495 % by weight of the carbon fibers, and
0.0500 to 15.0000 % by weight of the polar solvent,
calculated on the total weight of the hydrolyzed protein, the carbon fibers, and the polar solvent.

Most suitably, the composition comprises
0.01 to 10.00 % by weight of the hydrolyzed protein
75.00 to 99.94 % by weight of the carbon fibers, and
0.05 to 15.00 % by weight of the polar solvent,
calculated on the total weight of the hydrolyzed protein, the carbon fibers, and the polar solvent.

Furthermore, the composition suitably comprises
0.0005 to 5.0000 % by weight of the hydrolyzed protein,
10.0000 to 69.9495 % by weight of the curable resin or curable pre-polymer,
0.0500 to 7.0000 % by weight of the polar solvent, and
30.0000 to 89.9495 % by weight of the carbon fibers,
calculated on the total weight of the hydrolyzed protein, the curable resin or curable pre-polymer, carbon fibers, and the polar solvent.

More suitably the composition comprises
0.01 to 3.00 % by weight of the hydrolyzed protein,
10.00 to 69.94 % by weight of the curable resin or curable pre-polymer,
0.05 to 7.00 % by weight of the polar solvent, and
30.00 to 89.94 % by weight of the carbon fibers,
calculated on the total weight of the hydrolyzed protein, the curable resin or curable pre-polymer, carbon fibers, and the polar solvent.

Even more suitably the composition comprises
0.01 to 3.00 % by weight of the hydrolyzed protein,
15.00 to 59.94 % by weight of the curable resin or curable pre-polymer,
0.05 to 7.00 % by weight of the polar solvent, and
40.00 to 84.94 % by weight of the carbon fibers,
calculated on the total weight of the hydrolyzed protein, the curable resin or curable pre-polymer, carbon fibers, and the polar solvent.

Most suitably the composition comprises
0.01 to 3.00 % by weight of the hydrolyzed protein,
15.00 to 59.94 % by weight of the curable resin or curable pre-polymer,
0.05 to 5.00 % by weight of the polar solvent, and
40.00 to 84.00 % by weight of the carbon fibers,
calculated on the total weight of the hydrolyzed protein, the curable resin or curable pre-polymer, carbon fibers, and the polar solvent.

The invention also relates to a process of manufacturing a carbon fiber composite material. The process comprises the steps of
- providing a composition comprising
   a) 30.0000 to 89.9995 % by weight of carbon fibers,
   b) 0.0005 to 5.0000 % by weight of hydrolyzed protein,
   c) 10.0000 to 69.9995 % by weight of curable resin or curable pre-polymer, calculated on the total weight of the carbon fibers, hydrolyzed protein and curable resin or curable pre-polymer, and
- curing the composition to produce a carbon fiber composite material.

Preferably, the process of manufacturing a carbon fiber composite material, comprises the steps of
- providing a composition comprising
   a) 40.00 to 84.99 % by weight of carbon fibers,
   b) 0.01 to 3.00 % by weight of hydrolyzed protein,
   c) 15.00 to 59.99 % by weight of curable resin or curable pre-polymer, calculated on the total weight of the carbon fibers, hydrolyzed protein and curable resin or curable pre-polymer and
- curing the composition to produce a carbon fiber composite material.

The curing process can be conducted by any method known in the art. Curing can be performed at room temperature or - preferably - at elevated temperatures. It is possible to start at ambient temperature and then use the exothermal behavior of the system to achieve the temperature increase. It is also possible to force temperature increase by external heating, optionally in combination with pressure.

Typical procedures comprise sheet molding compounding (SMC), bulk molding compounding (BMC), infusion molding (RIM - resin infusion molding, RTM - resin transfer molding), compression molding, VARI (vacuum applied resin infusion), filament winding, pultrusion, and autoclave curing.

Generally, the same explanations provided above for the composition of the invention apply for the composition used in the process of the invention.

When preparing the composition for use in the process, the individual components can be added and mixed in any suitable sequence. Preferably the hydrolyzed protein is added to the carbon fibers prior, together with or after the curable resin or curable pre-polymer.

In some embodiments, the additive agent is added to the carbon fibers prior to including the curable resin or prepolymer component to the composition. The additive agent may be added to the carbon fibers directly after manufacture of the fibers, before or after any chopping, cutting or weaving of the fibers. The additive agent may be applied to the carbon fibers in any suitable way, for example by spraying the neat or diluted additive agent on the fiber surface, or by dipping the fibers into the additive agent, which may optionally be diluted with a solvent. It is also possible to apply the additive agent to a woven or non-woven fabric or roving of carbon fibers. In another preferred embodiment, the inventive additive is applied to the carbon fiber after the first sizing process is completed.

Alternatively, the additive agent may be pre-mixed with the curable resin or prepolymer component and included in the composition together with the curable resin or prepolymer component. In a still further embodiment, the additive agent is added to the composition after the carbon fibers have been combined with the curable resin or prepolymer component.

If so desired, the composition may be shaped in any suitable form prior to curing. Examples of shaping operation include placing the composition into a suitable mold, as well as forming of sheets by winding or rolling or pressing processes, optionally followed by cutting steps.

Curing of the composition may occur by radical polymerization; the term radical polymerization may also include processes in which chain transfer reactions are taking place. **In** a preferred embodiment, to facilitate the curing reaction, a radical generating curing agent may suitably be included in the composition. Organic peroxides, azo initiators and benzopinacol are well-known and suitable radical generating agents. In addition to radical generating agents or alternatively to them, irradiation may also be used to achieve the curing process.

Epoxy resins may be reacted either with themselves through catalytic homopolymerisation, or with a wide range of co-reactants including polyfunctional amines, acids (and acid anhydrides), phenols, alcohols and thiols (usually called mercaptans). Common epoxy resins are based on reacting epichlorohydrin with bisphenol A, resulting in a chemical substance known as bisphenol A diglycidyl ether. Polyurethanes are for example produced by reacting isocyanates with polyols in the presence of a catalyst, or upon exposure to ultraviolet light.

Curing is preferably carried out at elevated temperature, for example by heating the composition for a sufficient time and temperature to achieve the required degree of curing. Generally, curing can be carried out in the temperature range of 20 to 240 °C, preferably in the range of 40 to 220 °C, more preferred in the temperature range of 60 to 210 °C, even more preferred in the temperature range of 80 to 200 °C.

Depending on the process used, the curing can be obtained in a rather short period like 20 seconds to 3600 seconds, but may also take up to 4, 6, 12, or even 24 hours. Curing at elevated temperature can be carried out in an autoclave or a suitable oven or directly in a press.

The invention further relates to a carbon fiber composite material which is obtainable by any one of the described processes.

The invention further relates to the use of the additive composition as a coupling agent for carbon fiber composites.

The invention also relates to the use of the additive composition for improving the mechanical properties of a carbon fiber composite material.

### Experimental part

### List of raw materials

| Trade name | Chemical description or function | Supplier |
|---|---|---|
| Polyglykol M 350 PU | Methoxy polyethylene glycol 350 | Clariant |
| Polyglykol M 500 | Methoxy polyethylene glycol 500 | Clariant |
| PPG600 | Polypropylene glycol 600 | Ineos |
| ANiPept S | Protein hydrolysate (powder) from porcine side products (>60 % of protein fragments in 1-10 kDa) | ANiMOX |
| ANiPept M | Protein hydrolysate (powder) from porcine side products (>70 % of protein fragments in 1-20 kDa) | ANiMOX |
| ANiPept XL | Protein hydrolysate (powder) from porcine side products (>70 % of protein fragments >10 kDa) | ANiMOX |
| ANiPept M (bovine) | Protein hydrolysate (powder) from bovine side products (>70 % of protein fragments in 1-20 kDa) | ANiMOX |
| collagen hydrolysate (bovine) | Collagen hydrolysate (powder) from bovine | CDF Sports & Health Solutions GmbH |
| Gelatin porcine skin powder, for microbiology | Gelatin porcine skin powder, for microbiology Product no. 04055 | Merck (Sigma Aldrich) |
| Albumine fraction V, NZ-Origin | Albumin from bovine serum (powder) | Carl Roth |
| | Product no. 8076 | |
| Peptone from casein | Peptone from casein (powder) | Merck (Sigma Aldrich) |
| | Product no. C7210 | |
| Wheat peptone | Wheat peptone (powder) | Merck (Sigma Aldrich) |
| | Product no. 93492 | |
| Peptone from soybean, enzymatic digest microbiology | Peptone from soybean (powder), enzymatic digest microbiology | Merck (Sigma Aldrich) |
| | Product no. 70178 | |
| Peptone from pea for microbiology | Peptone from pea (powder) for microbiology | Merck (Sigma Aldrich) |
| | Product no. 96174 | |
| Peptone from potatoes - suitable for microbiology | Peptone from potatoes (powder) - suitable for microbiology | Merck (Sigma Aldrich) |
| | Product no. 83059 | |
| EPIKOTE Resin TRAC 06605 | Epoxy - Acrylate resin | Westlake / Hexion |
| EPIKURE Curing Agent TRAC 06608 | Amine-based Curing agent 1 | Westlake / Hexion |
| EPIKURE Curing Agent TRAC 06624 VP | Amine-based Curing agent 1 | Westlake / Hexion |
| EPIKURE Curing Agent TRAC 06612 VP | Amine-based curing agent 2 | Westlake / Hexion |
| TRAC-0061-H | Amine-based curing agent 2 | Westlake / Hexion |
| HELOXY ADDITIVE TRAC 06805 | nternal mold release agent | Westlake / Hexion |
| HELOXY ADDITIVE TRAC 06807 | nternal mold release agent | Westlake / Hexion |
| Zoltek PANEX 35-13 50K | Unidirectional carbon fabric; U-C-618g/m2-600mm | Saertex |
| TORAY T700SC F0E 12K | Unidirectional carbon fabric; U-C-470g/m²-1250mm | TORAY |
| Mitsubishi TR50S 12K | Unidirectional carbon fabric; N-C-416g/m2-1270mm | Mitsubishi |
| PANEX 35, type 13 sizing | Carbon fiber | Zoltek |
| ACMOScoat 82-9064 | Siloxane-based release agent | ACMOS Chemie KG |
| Kältespray brennbar | Cooling spray based on isopropane and butane | Westfalia AgriShop |
| Atlac^{®} XP 810 X | MgO thickenable VE resin for structural SMC applications | AOC resins |
| Palapreg^{®} H 2681-01 | Solution of a Saturated Polyester in Styrene for Premium Class A SMC | AOC resins |
| **BYK-P** 9085 | Processing additive | BYK-Chemie GmbH |
| Trigonox 117 | Curing agent: tert-Butylperoxy 2-ethylhexyl carbonate | Nouryon |
| Coathylene^{®} HA 1681 | LDPE, anti-shrinkage | Axalta |
| LUVATOL^{®} EK 100 KM | magnesium oxide paste for thickening | Lehmann & Voss |

### List of abbreviations used:

- kDa: kilo Dalton
- LDPE: low density polyethylene
- MPEG: Methoxypolyethylene glycol
- PPG: Polypropylene glycol
- SMC: Sheet Molding Compound
- UD: unidirectional
- wt: weight

### General preparation of coupling agent

20 g Protein powder (in general ANiPept M) were weighed in a 250 mL glass flask equipped with a stirring bar. 80 g solvent (in general MPEG 350) were added. Components were mixed on a magnetic stirrer at room temperature and 200 rpm until protein was dispersed. Avoiding sedimentation, sample was stored stirring until use for further process.

General formulation and preparation of epoxy-resin system:

**Table 1: Formulation**

| No. | Name | Function | Parts |
|---|---|---|---|
| 1 | Epikote Resin TRAC 06605 | Resin | 100 |
| 2 | Heloxy TRAC 06807 | Internal mold release agent | 3 |
| 3 | Epikure Curing Agent TRAC 06624 VP | Curing agent 1 | 7 |
| 4 | Coupling agent | Coupling agent | 5 |
| 5 | Epikure Curing Agent TRAC 06612 VP | Curing agent 2 | 11 |

The resin was filled into a 30l hobbock and the intemal mold release agent was added and mixed in thoroughly by hand. The curing agent 1 was added to the mixture and mixed again. The coupling agent was added to the formulation and mixed again by hand. The curing agent 2 was weighed separately and added to the formulation and mixed in the dissolver (700 rpm, 4.4 m/s) until dissolved completely.

The complete formulation was mixed in the dissolver with 2000 rpm (12.57 m/s) until a temperature of 30°C was reached.

### Preparation of fabrics for epoxy-resin:

The fabric (in general Zoltek PANEX 35-13 50K) was cut into 950 x 600 mm layers. Two layers were placed on top of each other, orientation of rovings aligned 0°, and weighed to calculate the fiber weight content after production.

### Preparation of chopped fibers for epoxy-resin:

The SMC line was started with the production parameters and the dry fibers (in general Panex 35, type 13 sizing) were weighed with a lid. The lid had a diameter of 320 mm, which equals 1 m². To achieve an area weight of 3000 g/ m² the fiber content in the lid had to be 125 g.

### Production of epoxy SMC

### Setting of SMC line:

| | | |
|---|---|---|
| Equipment: | SMC-Lab 800 HM-LB-23 by Schmidt & Heinzmann, manufactured 1989 | |
| Line speed: | 3.4 m/ min | |
| Width doctor blades: | 550 mm | |
| Opening of doctor blades: | fiber layers: | 1 mm |
| | Chopped fibers: | 1.2 mm |
| Pressure belts: | 1bar | |
| Pressure impregnation: | 1bar | |

The resin system was divided onto the two doctor blades.

### Using fabrics as reinforcement:

The package was inserted onto the SMC line, and this procedure was repeated until all the fabrics were used up. At the end of the SMC line, each package was cut off separately and placed flat onto a table and after all the packages had passed through, it was packed as one and stored for 14 days at 30 °C in the heated storage room.

### Using chopped fibers as reinforcement:

The chopped carbon fibers fell from the cutter onto the resin on the SMC line (combination of length 25 and 50 mm). The compound was processed through the line and rolled up at the end and stored for 14 days at 30°C in the heated storage room.

### Molding of epoxy SMC after maturing

### Molding parameters.

| | |
|---|---|
| Equipment: | Elast 200V by Engel, No. 207371, manufactured 2016 |
| Pressure: | 1000 KN / 83 bar |
| Time: | 300 sec |
| Temperature: | 150°C |
| Closing speed | 12 mm/ s |
| Thickness: | 2.5 mm |
| Mold size: | 300 x 400 mm |

After maturing, the SMC was cut to the size 390 x 290 mm. SMC with fabrics was molded with four layers, chopped fibers with two layers. All layers were weighed to calculate the fiber weight content of the final part.

Before molding the prepared SMC were stored over night at 20°C for better processing during molding.

A release agent was applied with a brush onto the mold. The release agent was also applied onto the base plate. The plate was molded for 300 sec to heat it up to processing temperature. Both, SMC and base panel, were placed in the mold and molded for 200 sec. After 200 sec, removal of base plate and additional molding for 90 sec.

All panels were weighed, and the fiber weight content of the final part calculated. The panels were examined optically.

**Table 2: Formulation and preparation of vinyl-ester resin system:**

| No. | Name | Function | Parts |
|---|---|---|---|
| 1 | Atlac^{®} XP 810 X | Vinyl ester resin | 92.5 |
| 2 | Palapreg^{®} H 2681-01 | Solution of a saturated Polyester | 7.5 |
| 3 | BYK-P 9085 | Processing additive | 5.0 |
| 4 | Coupling agent | Coupling agent | 5.0 |
| 5 | Trigonox 117 | Curing agent | 1.5 |
| 6 | Coathylene^{®} HA 1681 | Anti-shrinkage | 2.5 |
| 7 | LUVATOL^{®} EK 100 KM | Thickening | 8.0 |

The vinyl ester resin is weighed into a 30l hobbock and the saturated polyester was mixed in by hand thoroughly. The processing additive was added to the formulation and mixed in by hand. The peroxide was added next and mixed in by hand. The coupling agent and the LDPE were added and mixed in separately. The formulation was then mixed in the dissolver with 2000 rpm (12.57 m/s) until a temperature of 30°C was reached. The magnesium oxide paste for thickening was added last during mixing at 700 rpm (4.4 m/s) until completely dissolved. The formulation was then mixed at 700 rpm (4.4 m/s) for one minute.

For spray application vinyl ester resin was prepared accordingly but without coupling agent.

### Preparation of fabrics for vinyl ester:

The fabric (ZOLTEK PANEX 35-13 50K) was cut into 950 x 600 mm layers. Two layers were placed on top of each other, orientation of rovings aligned 0°, and weighed to calculate the fiber weight content after production.

Preparation of fabrics for vinyl ester resin, spray application:
The fabric (Mitsubishi TR50S 12K) was cut into square shaped sheets having an edge length of 600 mm. The additive was spray applied to both sides of the square shaped sheets with a spray gun SAT Jet 30 HVLP Digital, using a 1.3 mm spray nozzle. The amount of coupling agent applied was 6.5 g per sheet (18.05 g per m²).

The carbon fiber compositions were stored for 24 hours at 23° C, before impregnating with a curable resin.

Preparation of chopped fibers for vinyl ester resin:
The SMC line was started with the production parameters and the dry fibers (Panex 35, type 13 sizing) were weighed with a lid. The lid had a diameter of 320 mm, which equals 1 m². To achieve an area weight of 3000 g/ m² the fiber content in the lid had to be 125 g.

### Production of vinyl ester SMC

### Setting of SMC line:

| | | |
|---|---|---|
| Equipment: | SMC-Lab 800 HM-LB-23 by Schmidt & Heinzmann, manufactured 1989 | |
| Line speed: | 3.4 m/ min | |
| Width doctor blades: | 550 mm | |
| Opening of doctor blades: | fiber layers: | 1 mm |
| | Chopped fibers: | 1.2 mm |
| Pressure belts: | 1bar | |
| Pressure impregnation: | 1bar | |

The resin system was divided onto the two doctor blades.

Using fabrics as reinforcement:
The package was inserted onto the SMC line, and this procedure was repeated until all the fabrics were used up. At the end of the SMC line, each package was cut off separately and placed flat onto a table and after all the packages have passed through, it was packed as one and stored for 1 day at 30 °C in the heated storage room.

Using chopped fibers as reinforcement:
The chopped carbon fibers fell from the cutter onto the resin on the SMC line (combination of length 25 and 50 mm). The compound was processed through the line and rolled up at the end and stored for 1 day at 30°C in the heated storage room.

### Molding of vinyl ester SMC after maturing

### Molding parameters.

| | |
|---|---|
| Equipment: | Elast 200V by Engel, No. 207371, manufactured 2016 |
| Pressure: | 1000 KN / 83 bar |
| Time: | 300 sec |
| Temperature: | 150°C |
| Closing speed | 12 mm/ s |
| Thickness: | 2.5 mm |
| Mold size: | 300 x 400 mm |

After maturing, the SMC was cut to the size 390 x 290 mm.

SMC with fabrics was molded with four layers, chopped fibers with two layers.

All panels were weighed, and the fiber weight content of the final part calculated.

### Molding of vinyl ester SMC after maturing, spray application

The stacks described above were molded and cured at a pressure of 133 bar at 150°C for 120 s using a press model PYXZ ex Zeulenroda.

### Mechanical testing of reinforced samples

The panels were cut with a saw (Diamant Boart DV 27, diamond blade). For measurement of tensile strength according to DIN EN ISO 527-4:1997-07, the carbon fiber composite sheets were cut into specimen of 150 mm x 2-10 mm edge length. For measurement of transverse tensile strength according to DIN EN ISO 527-5B, the carbon fiber composite sheets were cut into specimen of 250 mm x 25 mm edge length. For measurement of flexural strength according to DIN EN ISO 14125, the carbon fiber composite sheets were cut into specimen of 80 mm x 15 mm edge length. The flexural strength measurement was carried out parallel to the fiber direction.

| | | |
|---|---|---|
| Flexural test | DIN-EN-ISO 14125:2011 | unidirectional fabric and chopped fiber |
| Tensile test | DIN-EN-ISO 527-4:1997 | chopped fiber |
| Transverse tensile test | DIN-EN-ISO 527-5B:2010 | unidirectional fabric |

### Before testing all specimen were stored at 23°C, 50% relative humidity for 24 hours.

After testing, results were evaluated and converted to an average fiber weight content within one experimental set-up.

### Concentration in epoxy resin system

Coupling agent was prepared according to general preparation of coupling agent with 20% ANiPept M and 80% MPEG 350. The reinforced samples were prepared with resin according to general formulation and preparation of epoxy resin system and with fabrics according to preparation of fabrics for epoxy resin. Epoxy SMC was prepared according to production of epoxy SMC and molded according to molding of epoxy SMC after maturing. Mechanical properties were tested according to mechanical testing of reinforced samples.

Increase in mechanical properties was stated in table 3 below as difference in % compared to control plate without coupling agent.

**Table 3**

| Concentration on resin [weight %] | Fiber content [weight %] | Increase in transverse tensile strength [%] | Increase in flexural strength [%] | Increase in E-modul flexural strength [%] |
|---|---|---|---|---|
| 3 | 76.82 | 3.45 | 24.15 | 29.58 |
| 5 | 76.82 | 13.53 | 36.05 | 34.19 |
| 10 | 76.82 | 104.24 | 33.19 | 67.11 |

With rising concentrations of medium-sized hydrolyzed protein increase of transverse tensile strength, flexural and E-modul flexural strength also rose.

### Physical form of coupling agent

The coupling agent was prepared according to the general preparation of coupling agent and was applied with 5 wt% on resin. The reinforced samples were prepared with resin according to the general formulation and preparation of epoxy resin system and with fabrics according to preparation of fabrics for epoxy resin. As curing agent 2 TRAC 0061 H was used. Epoxy SMC was prepared according to production of epoxy SMC and molded according to molding of epoxy SMC after maturing. Mechanical properties were tested according to mechanical testing of reinforced samples. The increase in mechanical properties was stated in table 4 below as difference in % compared to control plate without coupling agent.

**Table 4**

| Protein | Concentration on resin [weight %] | Concentration in solvent [weight %] | Solvent | Form | Fiber content [weight %] | Increase in transverse tensile strength [%] | Increase in flexural strength [%] |
|---|---|---|---|---|---|---|---|
| ANiPept M | 1 | - | - | powder | 72.47 | 5.61 | 11.09 |
| ANiPept M | 5 | 10 | MPEG 350 | dispersion | 71.30 | 42.65 | 47.04 |
| ANiPept M | 5 | 20 | MPEG 350 | dispersion | 72.44 | 10.40 | 12.68 |

Table 4 shows that the addition of hydrolyzed protein in powder form as well as hydrolyzed protein dispersion leads to an increase in transverse tensile and flexural strength.

### Alternative carbon fabrics with epoxy resin

The coupling agent was prepared according to the general preparation of coupling agent. Concentration of protein in solvent is listed in table 5 below. The coupling agent was applied with 5 wt% on resin. The reinforced samples were prepared with epoxy resin according to general formulation and preparation of epoxy resin system and according to preparation of fabrics for epoxy resin. As curing agent 2 TRAC 0061 H was used. Differences in fabrics are listed in table below.

Increase in mechanical properties was stated in table 5 below as difference in % compared to control plate without coupling agent.

**Table 5**

| Protein | Concentration in solvent [weight %] | Fabric | Fiber content [weight %] | Increase in transverse tensile strength [%] | Increase in flexural strength [%] |
|---|---|---|---|---|---|
| Anipept M | 10 | TORAY T700SC F0E 12K U-C-470g/m²-1250mm | 67.01 | 23.87 | 30.25 |
| Anipept M | 20 | TORAY T700SC F0E 12K U-C-470g/m²-1250mm | 74.84 | 30.58 | 6.63 |
| Anipept M | 20 | Zoltek PANEX 35-13 50K U-C-618g/m2-600mm | 78.40 | 76.81 | 46.18 |

On epoxy carbon composites with different carbon fabrics, a significant increase of mechanical properties by the addition of the hydrolyzed protein dispersion could be shown.

### Alternative curing system, internal mold release agent and fabric

The coupling agent was prepared according to the general preparation of coupling agent with 20% ANiPept M and 80% MPEG 350 and was applied with 5 wt% on resin. The reinforced samples were prepared with epoxy resin according to the general formulation and preparation of epoxy resin system and according to the preparation of fabrics for epoxy resin. Differences in curing agents, internal mold release agent and fabric were listed in table 6 below.

Increase in mechanical properties was stated in table below as difference in % compared to control plate without coupling agent.

**Table 6**

| Curing agent 1 | Curing agent 2 | Internal mold release agent | Fabric | Fiber content [weight %] | Increase in transverse tensile strength [%] | Increase in flexural strength [%] |
|---|---|---|---|---|---|---|
| Epikure Curing Agent TRAC 06624VP | Epikure Curing Agent TRAC 06612 VP | Heloxy Additive TRAC 06807 | Zoltek PANEX 35-13 50K | 76.82 | 30.50 | 16.42 |
| Epikure Curing Agent TRAC 06624VP | TRAC 0061 H | Heloxy Additive TRAC 06807 | TORAY T700SC F0E 12K | 74.84 | 30.58 | 6.63 |
| Epikure Curing Agent TRAC 06608 | - | Heloxy Additive TRAC 06805 | TORAY T700SC F0E 12K | 72.81 | 22.75 | 32.77 |
| Epikure Curing Agent TRAC 06608 | - | Heloxy Additive TRAC 06805 | Mitsubishi TR50S 12K | 68.58 | 85.00 | 45.38 |

Table 6 shows a significant increase of mechanical properties by addition of the hydrolyzed protein dispersion, even when using different curing systems, internal mold release agents and carbon fabrics.

### Variation of reinforcement

The coupling agent was prepared according to the general preparation of coupling agent with 20% ANiPept M and 80% MPEG 350 and was applied with 5 wt% on resin. The reinforced samples were prepared according to the general formulation and preparation of resin system for epoxy resin and according to the preparation of chopped fibers for epoxy resin with carbon fiber Panex 35, type 13 sizing.

The increase in mechanical properties was stated in table 7 below as difference in % compared to control plate without coupling agent.

**Table 7**

| Protein | Fiber content [weight %] | Increase in tensile strength [%] | Increase in flexural strength [%] |
|---|---|---|---|
| Anipept M | 52.33 | 65.80 | 50.75 |

Table 7 shows that the addition of hydrolyzed protein to the application system leads to a significant increase in mechanical properties.

### Size distribution in protein hydrolysate

The coupling agent was prepared according to the general preparation of coupling agent with 20 % protein hydrolysate (listed in table 8 below) and 80 % MPEG 350 and was applied with 5 wt% on resin. The reinforced samples were prepared with epoxy resin according to general the formulation and preparation of epoxy resin system and according to the preparation of fabrics for epoxy resin.

The increase in mechanical properties was stated in table below as difference in % compared to control plate without coupling agent.

**Table 8**

| Protein | Fiber content [weight %] | Increase in transverse tensile strength [%] | Increase in flexural strength [%] |
|---|---|---|---|
| Anipept M | 76.82 | 30.50 | 16.42 |
| Anipept S | 76.82 | 39.52 | 27.89 |
| Anipept XL | 76.82 | 35.81 | 33.85 |
| Anipept XL | 76.82 | 31.03 | 32.08 |

The hydrolyzed proteins with different size distributions (1-100 kDa) showed all an increasing effect on mechanical properties of the epoxy carbon composite.

### Alternative solvents

The coupling agent was prepared according to the general preparation of coupling agent with 20 % ANiPept M and 80 % solvent and was applied with 5 wt% on resin. The different solvents are listed in table 9 below. The reinforced samples were prepared with epoxy resin according to the general formulation and preparation of epoxy resin system and according to the preparation of fabrics for epoxy resin.

The increase in mechanical properties was stated in table 9 below as difference in % compared to control plate without coupling agent.

**Table 9**

| Solvent | Fiber content [weight %] | Increase in transverse tensile strength [%] | Increase in flexural strength [%] |
|---|---|---|---|
| **MPEG** 350 | 76.82 | 30.50 | 16.42 |
| **MPEG** 500 | 70.94 | 49.39 | 54.21 |
| PPG 600 | 70.94 | 42.04 | 3.44 |

Table 9 shows that in different polar solvents, an increasing effect of hydrolyzed protein on mechanical properties could be obtained.

### Alternative protein sources

The coupling agent was prepared according to the general preparation of coupling agent with 20 % protein and 80 % MPEG 350 and was applied with 5 wt% on resin. The protein sources were listed in table 10 below. The reinforced samples were prepared with epoxy resin according to the general formulation and preparation of epoxy resin system and according to the preparation of fabrics for epoxy resin.

The increase in mechanical properties was stated in table 10 below as difference in % compared to control plate without coupling agent.

**Table 10**

| Protein | Fiber content [weight %] | Increase in transverse tensile strength [%] | Increase in flexural strength [%] |
|---|---|---|---|
| Anipept M | 76.82 | 30.50 | 16.42 |
| Gelatin (type G) from porcine skin | 72.33 | Not measurable | Not measurable |
| collagen hydrolysate (bovine) | 72.33 | 27.46 | 37.46 |
| Albumine fraction V | 70.94 | 53.47 | 16.97 |
| Peptone from casein | 70.94 | 45.31 | 29.93 |
| Wheat peptone | 72.33 | 13.38 | 37.46 |
| Peptone from soybean | 72.33 | 7.04 | 43.17 |
| Peptone from pea | 70.94 | 49.39 | 30.76 |
| Peptone from potatoes | 70.94 | 71.43 | 14.21 |

Protein hydrolysates from various sources (plant or animal) lead to a significant increase of the mechanical properties of the carbon fiber composite. Non hydrolyzed protein like gelatin (type G gelatin) could not be incorporated in system and therefore, no measurement of mechanical properties was possible.

### Vinyl ester resin system

The coupling agent was prepared according to the general preparation of coupling agent with 20 % ANiPept M and 80 % MPEG 350. The different concentrations on resin system were listed in table 11 below. The reinforced samples were prepared with vinyl ester resin according to the formulation and preparation of vinyl ester resin system and with fibers according to the preparation of chopped fibers for vinyl ester.

The increase in mechanical properties was stated in table **11** below as difference in % compared to control plate without coupling agent.

**Table 11**

| Concentration on resin [weight %] | Fiber content [weight %] | Increase in tensile strength [%] |
|---|---|---|
| 1 | 51.78 | 2.08 |
| 3 | 51.78 | 1.07 |
| 5 | 51.78 | 9.81 |

Table 11 shows that also for vinyl ester carbon composites an increase of the mechanical properties could be obtained.

### Vinyl ester resin system, spray application

The coupling agent was prepared according to the general preparation of coupling agent with 20 % ANiPept M and 80 % MPEG 350. The reinforced samples were prepared with vinyl ester resin according to the formulation and preparation of vinyl ester resin system (for spray application) and with fibers according to the preparation of fabrics for vinyl ester, spray application.

The increase in mechanical properties was stated in table 12 below as difference in % compared to control plate without coupling agent.

**Table 12**

| Concentration on fiber | fiber content [weight %] | Increase in transverse tensile strength [%] | Increase in flexural strength [%] |
|---|---|---|---|
| 6.40g/ 0.1131 m2 | 54.00 | 12.55 | 14.80 |
| 6.71 g/ 0.1131 m2 | 54.00 | 17.00 | 33.33 |
| 6.52g/ 0.1131 m2 | 54.00 | 21.46 | 29.96 |
| 6.09g/ 0.1131 m2 | 54.00 | 28.34 | 25.39 |

By spray application of the coupling agent, first on the fabric and then addition of the vinyl ester resin an increase of mechanical properties could be gained.

## Claims

1. An additive composition comprising
hydrolyzed protein, and
at least one of a polar solvent, wherein the polar solvent comprises at least one polymer based on ethylene oxide or propylene oxide and mixtures thereof, wherein optionally the end groups are etherified with alkyl groups having 1 to 6 carbon atoms.

2. The additive composition according to claim 1 wherein the composition comprises
0.1 to 50.0 % by weight of the hydrolyzed protein, and
50.0 to 99.9 % by weight of the polar solvent,
calculated on the total weight of the hydrolyzed protein and polar solvent.

3. The additive composition according to any one of the preceding claims, wherein the polar solvent has a molecular weight of from 100 to 1000 g/mol.

4. The additive composition according to any one of the preceding claims, wherein the polar solvent comprises at least one of methoxy polyethylene glycol, polyethylene glycol and polypropylene glycol.

5. The additive composition according to any one of the preceding claims, wherein the hydrolyzed protein comprises or contains hydrolyzed protein derived from animals or plants or mixtures thereof.

6. The additive composition according to any one of the preceding claims, wherein the hydrolyzed protein is derived from collagen.

7. Use of the additive composition according to any one of the preceding claims as a coupling agent for carbon fiber composites.

8. Use of the additive composition according to any one of the preceding claims for improving the mechanical properties of a carbon fiber composite material.
